# EUROPÄISCHE PATENTSCHRIFT

(11) **EP 0 933 884 B1**
(45) Veröffentlichungstag und Bekanntmachung des Hinweises auf die Patenterteilung: **16.08.2006**
(21) Anmeldenummer: 99101174.3
(22) Anmeldetag: 22.01.1999
(51) Int. Cl.: H04B 7/005

(54) **Sendeleistungsanpassung insbesondere bei der drahtlosen In-House-Kommunikation**
Transmission power adjustment particularly for wireless in-house communication
Adaptation de la puisssance de transmission en particulier pour la communication domestique sans fil

(30) Priorität: 31.01.1998 DE 19803849
(43) Veröffentlichungstag der Anmeldung: 04.08.1999
(73) Patentinhaber: Grundig Multimedia B.V., 1083HJ Amsterdam (NL)
(72) Erfinder: Ziegler, Cornelius, 90762 Fürth (DE)
(74) Vertreter: Pröll, Jürgen

(56) Entgegenhaltungen:
- WO-A-97/49197
- DE-A- 4 242 705
- US-A- 4 567 485
- US-A- 5 220 678
- PATENT ABSTRACTS OF JAPAN vol. 016, no. 420 (E-1259), 4. September 1992 (1992-09-04) & JP 04 144317 A (NEC CORP), 18. Mai 1992 (1992-05-18)

## Beschreibung

Die Erfindung betrifft ein Verfahren zur Sendeleistungsanpassung bei Kommunikationsgeräten, insbesondere bei Geräten der Unterhaltungselektronik.

Derartige Kommunikationsgeräte kommen beispielsweise bei einem sogenannten "IN-House"-Netz zum Einsatz. Das IN-House-Netz dient der Übertragung von Informationen an verschiedene Kommunikationsgeräte innerhalb eines Hauses, wie beispielsweise Fernsehgerät, Heizung, Raumüberwachung, sowie zwischen diesen.

Aus Patent Abstracts of Japan, Band 016, Nr. 420, 04.09.1992, JP 04 144 317 A ist eine Vorrichtung zur Überwachung uns Steuerung eines Satellitenübertragungssystems zur Kommunikation zwischen der Erdstation und dem Satelliten offenbart. Hierzu wird ein Pilotsignal durch einen Modulator einem Satellitensendesignal aufmoduliert und an einem erdstationären Satelliten übertragen. Das Pilotsignal wird vom Kommunikationssatelliten reflektiert und von in der Vorrichtung angeordneten Demodulator demoduliert. Ein Detektor ermittelt den Bit-Ratenfehler des demodulierten Pilotsignals. Die Übertragungsgeschwindigkeit wird derart gesteuert, dass diese koinzident mit der Bit-Ratenfehler-Rate liegt.

Der Erfindung liegt die Aufgabe zugrunde, ein Verfahren zur Sendeleistungsanpassung anzugeben, das auf einfache Weise eine Reduzierung der Sendeleitung ermöglicht.

Diese Aufgabe wird durch ein Verfahren zur Sendeleistungsanpassung bei Kommunikationsgeräten gelöst, bei dem von einem ersten Kommunikationsgerät ein Testsignal ausgesendet wird, dieses Testsignal von einem zweiten Kommunikationsgerät empfangen und wieder zurückgesendet wird. Im ersten Kommunikationsgerät wird das vom zweiten Kommunikationsgerät empfangene und zurückgesandte Testsignal auf Übereinstimmung mit dem Original untersucht. Aus dem Grad der Übereinstimmung wird eine Regelgröße zur Regelung der Sendeleistung des ersten Kommunikationsgerätes abgeleitet wird.

Der Einsatz des Verfahrens zur Sendeleistungsanpassung ist in den Fällen geeignet, wenn das erste Kommunikationsgerät eine Signalaufbereitungseinrichtung zur Aufbereitung von analogen und/oder digitalen Ton- und/oder Bildsignalen, insbesondere von Rundfunk-, Fernseh- und/oder Telefonsignalen aufweist und das zweite Kommunikationsgerät ein Teilnehmergerät an von der Signalaufbereitungseinrichtung zur Verfügung stehenden Dienste ist.

Der Erfindung liegt die Erkenntnis zugrunde, daß es bei beispielsweise drahtlos miteinander gekoppelten Kommunikationsgeräten häufig nicht erforderlich ist, daß die Kommunikationsgeräte mit einer konstanten, d.h. mit einer relativen hohen, Sendeleistung Signale aussenden. Ein Anwendungsfall besteht beispielsweise darin, daß drahtlos mit einem Fernsehgerät gekoppelte Zusatzlautsprecher in räumlicher Nähe zum Fernsehgerät angeordnet sind. In diesem Fall ist es völlig ausreichend, wenn die Sendeleistung bei der Übertragung der Fernsehtonsignale auf das Nötigste reduziert wird. Hierzu wird vom ersten Kommunikationsgerät, beispielsweise vom Fernsehgerät, bei der Erstinbetriebnahme der Zusatzlautsprecher ein Testsignal ausgesendet. Dieses Testsignal wird vom zweiten Kommunikationsgerät empfangen und wieder ausgesendet. Im Fernsehgerät, d.h. im ersten Kommunikationsgerät erfolgt daraufhin eine Auswertung des empfangenen Testsignals, wobei die Sendeleistung daraufhin in vorgebbaren Schritten solange verringert werden kann, bis die gewünschte Signalqualität erreicht wird. Der Vorteil des Verfahrens besteht insbesondere darin, daß die Sendeleistung der Kommunikationsgeräte auf das Nötigste reduziert wird, was zum einen den Energieverbrauch reduziert und zum anderen den Benutzer mit einem Minimum an HF-Energie belastet und somit zu einer Reduzierung des Phänomens "Elektrosmogs" führt. Bei dem Betrieb mehrerer Kommunikationsgeräte innerhalb eines Hauses oder in benachbarten Wohneinheiten wird darüberhinaus eine Störung der jeweiligen Kommunikationsgeräte vermieden bzw. zumindest reduziert.

Eine wirksame Anpassung der jeweils erforderlichen Sendeleistung, angepaßt an die jeweils herrschenden Betriebverhältnisse wie z. B. Entfernung zwischen den Kommunikationsgeräten etc., kann auf einfache Weise dadurch erreicht werden, daß die Sendeleistung solange verringert wird, wie der Grad der Übereinstimmung einen vorgebbaren Grenzwert nicht unterschreitet.

Bei einem stationären Betrieb der miteinander zu verbindenenden Kommunikationsgeräte ist es in der Regel ausreichend, daß die Sendeleistungsanpassung einmalig bei Erstinbetriebnahme einer aus stationären Kommunikationsgeräten bestehenden Kommunikationsgerätekonfiguration erfolgt.

Eine Einbindung weiterer Kommunikationsgeräte ist auf einfache Weise dadurch möglich, daß die Sendeleistungsanpassung auch bei einem zusätzlich hinzukommenden Kommunikationsgerät erfolgt. Die Veränderung von Betriebsbedingungen, wie beispielsweise veränderte Leitungswiderstände bei leitungsgebundener Übertragung, kann dadurch berücksichtigt werden, daß die Sendeleistungsanpassung in vorgebbaren Zeitabständen erfolgt.

Bei an verschiedenen Standorten zu betreibenden Kommunikationsgeräten oder bei mobilem Betrieb ist es vorteilhaft, daß die aktuell erforderliche Sendeleistung kontinuierlich in Abhängigkeit des jeweils ermittelten Grades der Übereinstimmung des gesendeten zum wieder empfangenen Testsignals ermittelt und eingestellt wird.

Eine Störung der Nutzdatenübertragung durch das Testsignal kann auf einfache Weise dadurch vermieden werden, daß die Sendeleistungsanpassung zu Beginn einer Verbindungsaufnahme vor Beginn einer Übertragung von Nutzdaten oder parallel hierzu zwischen dem ersten und dem zweiten Kommunikationsgerät erfolgt.

Besonders geeignet ist das Verfahren für Geräte der Unterhaltungselektronik.

Besonders geeignete Anwendungsfälle des Verfahrens sind, daß das erste und das zweite Kommunikationsgerät über eine drahtlose oder eine drahtgebundene bidirektionale Verbindung miteinander koppelbar sind.

Je nach vorhandener Infrastruktur und Art des Kommunikationsgerät kann die Übertragung des Testsignals vom ersten Kommunikationsgerät über ein erstes Übertragungsmedium, insbesondere ein drahtloses Übertragungsmedium erfolgen, während die Rückübertragung des Testsignals vom zweiten Kommunikationsgerät zum ersten Kommunikationsgerät über ein zweites Übertragungsmedium, insbesondere ein drahtgebundenes Übertragungsmedium erfolgen kann.

Die Aufgabe wird weiterhin durch ein Kommuniktionsgerät nach Anspruch 10 gelöst.

Im folgenden wird die Erfindung anhand der in den Figuren dargestellten Ausführungsbeispiele näher beschrieben und erläutert.

Es zeigen:
- Fig. 1: ein erstes Ausführungsbeispiel zur Übertragung eines Sendeleitungsregelsignals mit zwei Kommunikationsgeräten,
- Fig. 2: ein Blockschaltbild mit einer Prinzipdarstellung der Erzeugung eines Sendeleitungsregelsignals,
- Fig. 3: ein Ausführungsbeispiel eines Kommunikationsnetzes,
- Fig. 4: ein zweites Ausführungsbeispiel zur Übertragung eines Sendeleitungsregelsignals mit zwei Kommunikationsgeräten und
- Fig. 5: ein weiteres Ausführungsbeispiel eines Kommunikationsnetzes mit einer Kopfstation zur Verteilung von Medien und/oder Videosignalen.

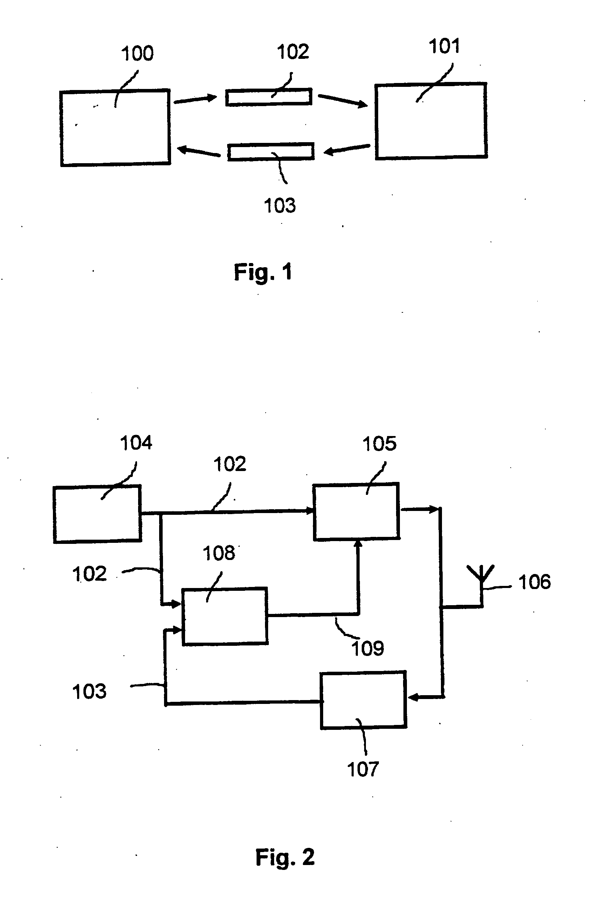

Fig. 1 zeigt ein erstes Ausführungsbeispiel zur Sendeleistungsreduzierung zweier Kommunikationsgeräte 100, 101. Das erste Kommunikationsgerät 100 sendet ein Testsignal 102 aus, das von einem zweiten Kommunikationsgerät 101 empfangen wird. Das zweite Kommunikationsgerät 101 wird in der empfangenen Weise das Testsignal 103, welches das empfangenen Testsignal 102 ist, unverändert wie das Testsignal 102 empfangen wurde, an das erste Kommunikationsgerät 100 zurückgesendet.

Wie im Zusammenhang mit Fig. 2 noch erläutert wird, wird im ersten Kommunikationsgerät 100 das empfangene Testsignal 103 auf Übereinstimmung mit dem Original, d.h. mit dem Testsignal 102 geprüft und aus dem Grad der Übereinstimmung eine Anpassung der Sendeleistung vorgenommen. Die Sendeleistung des Kommunikationsgerätes 100 wird solange verringert, bis der Grad der Übereinstimmung einen einstellbaren Grenzwert erreicht. Im Mobilbetrieb der Kommunikationsgeräte 100, 101 kann eine Anpassung der Sendeleistung parallel zur Übertragung von Nutzsignalen kontinuierlich erfolgen. Bei stationär betriebenen Kommunikationsgeräten 100, 101 ist es in der Regel ausreichend, wenn die Einstellung einer Sendeleistung bei der Erstinbetriebnahme der Kommunikationsgeräte 100, 101 durchgeführt wird.

Fig. 2 zeigt ein Blockschaltbild mit einer Prinzipdarstellung zur Erzeugung eines Sendeleistungsregelsignals 109. Die in Fig. 2 dargestellten Teile des Blockschaltbilds sind beispielsweise in dem in Fig. 1 dargestellten Kommunikationsgerät 100 integriert. Im einzelnen weist das in Fig. 2 dargestellte Blockschaltbild einen Testmustergenerator 104 auf, der ein Testsignal 102 an eine Sendeeinrichtung 105 sowie an einen Grenzwertvergleicher 108 weiterleitet. Der Grenzwertvergleicher 108 ist als Komparator ausgebildet. Das Ergebnis des Komparators wird einer Bewertungseinheit zugeführt, welche die Qualität des empfangenen Testsignals 103 zum Original-Testsignal 102 bewertet. Die Sendeeinrichtung 105 ist mit einer Sende-Empfangsantenne 106 verbunden. Darüber hinaus ist eine Empfangseinrichtung 107 vorgesehen, die ebenfalls mit der Sende-Empfangsantenne 106 gekoppelt ist. Die Empfangseinrichtung 107 empfängt ein von einem zweiten Kommunikationsgerät (vgl. Fig. 1) ans Kommunikationsgerät 100 zurückgesendetes Testsignal 103, welches der Vergleichseinrichtung 108 zugeführt wird. Am Ausgang der Vergleichseinrichtung 108 wird eine Regelgröße 109 gebildet, die der Einstellung der Sendeleistung der Sendeeinrichtung 105 dient. Als Sendeeinrichtung 105 kann ein im Kommunikationsgerät 100 ohnehin für Nutzsignalübertragungen vorhandener Nutzsignalsender verwendet werden. Gleiches gilt für die Empfangseinrichtung 107.

Anstelle einer Anbindung an eine Sende-Empfangsantenne 106 kann bei drahtgebundenen Übertragungen auch ein Anschluß an ein drahtgebundenes Übertragungsmedium vorgesehen sein. Der Testsignalgenerator 104 kann ein Digitalsignal oder, je nach Anwendungsfall, auch ein analoges Testsignal erzeugen. Das vom Testsignalgenerator 104 erzeugte Testsignal 102 wird, ggfs. in Verbindung mit einem Kennungssignal zur eigenen und/oder zur Identifizierung einer gerufenen Gegenstelle, d.h. zu einem zweiten Kommunikationsgerät, mit dem ein Verbindungsaufbau erfolgen soll, übertragen. Von dieser Gegenstelle, d.h. vom zweiten Kommunikationsgerät, wird dieses Testsignal empfangen und wieder, ggfs. ebenfalls mit einer entsprechenden Kennung des ersten Kommunikationsgerät, von dem das Testsignal 102 gesendet wurde, zurückgesendet. Im ersten Kommunikationsgerät wird das empfangene Testsignal 103 auf Übereinstimmung mit dem ursprünglich gesendeten Testsignal 102 überprüft. Hierzu dient die Vergleichseinrichtung 108, in der ein Grenzwert bzw. ein Kriterium gespeichert ist, welches das Minimum der geforderten Empfangsqualität kennzeichnet. In einer vorteilhaften Ausgestaltung der Erfindung ist die Vergleichseinrichtung 108 derart ausgeführt, daß zunächst ein Soll-IstVergleich durchgeführt wird, anschließend wird ein Vergleich der Abweichung mit einem vorgegebenen Grenzwert vorgenommen. Abhängig vom Grad dieser Übereinstimmung des Testsignals 102, sowie des Testsignals 103, wird mit Hilfe der von der Vergleichseinrichtung 108 gelieferten Regelgröße 109 die Sendeleistung der Sendeeinrichtung 105 angepaßt. Mit Hilfe des erfindungsgemäßen Verfahrens wird erreicht, daß leistungsschwächere oder weiter entferntere Modems oder Sendeeinrichtungen nicht durch stärkere oder in unmittelbarer Nähe befindliche Modems oder Sendeeinrichtungen "übertönt" oder "überfahren" werden. Darüber hinaus wird vermieden, daß durch hohe Übertragungspegel die Eingangsempfindlichkeit des Empfängers 107 durch Ansprechen beispielsweise einer automatischen Verstärkungsregelung herabgesetzt wird, was wiederum beim Empfang von Signal mit einem schwächeren Pegel nachteilig wäre.

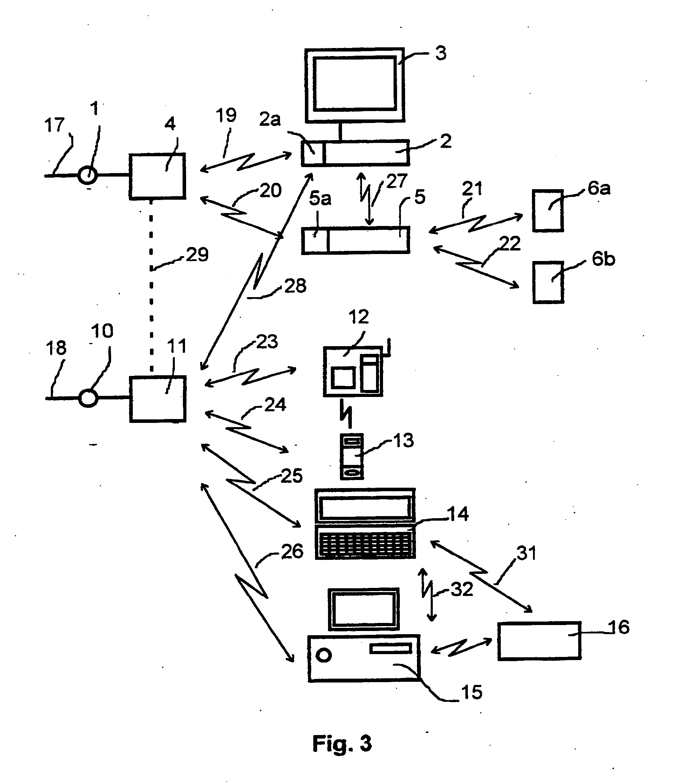

Fig. 3 zeigt ein Ausführungsbeispiel eines Kommunikationssystems, welches eine Vielzahl von Kommunikationsgeräten 2, 3, 4, 5, 6a, 6b, 11, 12, 13, 14, 15, 16 aufweist. Das in Fig. 3 dargestellte Kommunikationssystem weist eine erste Signalquelle 1 auf, welche zur Verteilung von Fernsehsignalen 17 vorgesehen ist, die über Kabel, Satellit oder terrestrisch empfangen werden. Die Signale 17 der Signalquelle 1 werden einer Signalaufbereitungseinrichtung 4 zugeführt, die der Verteilung der Signale 17 an Kommunikationsgeräte 2, 3, 5, dient. Die Kommunikationsgeräte 2, 3, 5 sind bei dem in Fig. 3 dargestellten Ausführungsbeispielen ein TV-Empfänger 2 mit einer Empfangseinrichtung 2a, ein Bildschirm 3, sowie eine Rundfunkempfangseinrichtung 5 mit einem Empfangsteil 5a. Die Übertragung der Signale 17 zwischen der Signalaufbereitungseinrichtung 4 und dem Fernseh- bzw. Rundfunkempfänger 2, 5 erfolgt dabei drahtlos über Funkschnittstellen 19, 20. Die vom Rundfunkempfänger 5 empfangenen Signale können über weitere Funkschnittstellen 21, 22, die beispielsweise als Infrarotschnittstellen ausgebildet sind, an Lautsprecher 6a, 6b verteilt werden. Das in Fig.3 dargestellte Kommunikationssystem weist darüber hinaus eine zweite Signalquelle 10 zum Empfang von Telefonsignalen 18 auf. Die Telefonsignale 18 werden einer zweiten Signalaufbereitungseinrichtung 11 zugeführt, die über Funkschnittstellen 23 bis 26 mit Endgeräten 12 bis 16 verbindbar sind. Als Kommunikationsendgeräte sind bei dem in Fig. 3 dargestellten Ausführungsbeispiel ein Telefonapparat 12, ein schnurloser Telefonapparat 13, ein tragbarer Personalcomputer 14, sowie ein stationärer Personalcomputer 15 mit über eine Schnittstelle 31 anschließbaren Drucker 16 vorgesehen. Eine Verbindung zwischen stationären Personalcomputer 15 und tragbaren Personalcomputer 14 ist über eine weitere Schnittstelle 32 möglich. Das in Fig. 3 dargestellte Kommunikationssystem weist darüber hinaus eine gestrichelt eingezeichnete Verbindungsmöglichkeit zwischen den Signalaufbereitungseinrichtungen 4, 11 auf, wodurch eine Verbindung der verschiedenen Signalquellen 4, 11 möglich wird. Außerdem ist über eine Funkschnittstelle 28 auch eine Kopplung der TV-Empfangseinrichtung 2 an die zweite Signalquelle 10 vorgesehen.

Das in Fig. 3 dargestellte Kommunikationssystem beruht auf einer dezentralen Struktur der Signalquellen 1, 10, d.h. die Signalquellen 1, 10 bzw. die entsprechenden Signalaufbereitungseinrichtungen 4, 11 sind mit den jeweiligen Kommunikationsendgeräten 2, 3, 5 bis 12 bis 15 direkt über die drahtlose Inhouse-Verbindung verbunden.

Eine derartige dezentrale Struktur des Kommunikationssystems hat den Vorteil, daß alle Dienste der Signalquellen 1, 10 am jeweiligen Ort, an welchem diese zur Verfügung stehen, direkt verteilt werden können, ohne daß eine zentrale Zusammenfassung zu einem Datenstrom erfolgen muß. Hierdurch kann ein zusätzlicher Verkabelungsaufwand zu einer ansonsten notwendigen Zentralstation vermieden werden. Die Abgabe unnötiger Sendeleistungen der Kommunikationsendgeräte wird dadurch auf ein Minimum reduziert, daß das in den Fig.1, 2, 4 angewendete Verfahren zur Sendeleistungsanpassung vorgesehen ist. Hierdurch werden die über die Funkschnittstellen auszusendenden Sendeleistungen auf ein Minimum reduziert und somit Störeinflüsse der verschiedenen Kommunikationsgeräte untereinander, sowie für den Benutzer der Kommunikationsendgeräte, auf ein Minimum reduziert.

Bei der Signalquelle 1 handelt es sich beispielsweise um eine Datenquelle, die Fernsehsignale bereitstellt, die über die Verbindungsleitung 17 an die Signalaufbereitungseinrichtung 4 geliefert werden. Die Signalaufbereitungseinrichtung 4 dient zur Decodierung der von der Signalquelle 1 gelieferten Fernsehsignale, sowie zur Abstrahlung der entsprechend aufbereiteten Fernsehsignale an die jeweiligen Endgeräte 2, 3, 5. Durch die drahtlose Anbindung der Endgeräte 2, 3, 5 an die Signalaufbereitungseinrichtung 4 entfällt somit beispielsweise innerhalb einer Wohneinheit ein zusätzlicher Verkabelungsaufwand. In entsprechender Weise werden die von der Signalquelle 10 über die Verbindungsleitung 18 gelieferten Telefonsignale von der zweiten Signalaufbereitungseinrichtung 11 an die mit dieser koppelbaren Kommunikationsendgeräte 12 bis 15 übermittelt. Über eine Verbindungsleitung 19 bzw. durch direkte Anbindung an die jeweilige Signalaufbereitungseinrichtung ist es auch möglich, daß bestimmte Kommunikationsendgeräte, wie beispielsweise der Personalcomputer 15, mit mehreren Signalquellen 1, 10, in Verbindung steht. Hierdurch wird es beispielsweise möglich, daß der Personalcomputer 15 auf Signale aus der Signalquelle 1 empfangen kann. Somit weist das in Fig. 3 dargestellte Kommunikationssystem Kommunikationsendgeräte auf, die auf keinen Dienst zugreifen, wie dies beispielsweise bei den in Fig. 3 dargestellten Lautsprechern 6a, 6b, sowie dem Drucker 16, der Fall ist. Darüber hinaus sind auch Kommunikationsendgeräte vorgesehen, welche lediglich einen einzigen Dienst nutzen; wie dies beispielsweise bei dem Telefon 12, 13 der Fall ist. Insgesamt entsteht durch das in Fig.1 dargestellte Kommunikationssystem eine flexible Anpassung an die entsprechenden Signalquellen 1, 10. Damit ein direkter paralleler Zugriff der verschiedenen Endgeräte auf die unterschiedlichen Signalquellen 1,10 möglich ist, weisen die Signalaufbereitungseinrichtungen 4, 11, sowie die Kommunikationsendgeräte 2, 3, 5,12 bis15 entsprechende Modems auf, die der Adressierung sowie der An- bzw. Abmeldung dienen. Die jeweils benötigten Sendeleistungen werden bei stationär betriebenen Kommunikationsgeräten, wie beispielsweise der Fernsehempfangseinrichtung 2 sowie der Rundfunkempfangseinrichtung 5 lediglich bei der Erstinbetriebnahme dieser Geräte fest eingestellt, während die Sendeleistungsanpassung bei im mobilen Einsatz betriebenen Kommunikationsgeräten 14, 13 jeweils bei einem Verbindungsaufbau und ggfs. auch kontinuierlich während der Übertragung erfolgt. Auch bei einer Änderung, beispielsweise durch ein neu hinzukommendes Kommunikationsgerät, kann eine Sendeleistungsanpassung durchgeführt werden. Als Übertragungsverfahren kommt beispielsweise ein Kanalzugriffsverfahren, wie CDMA, DTMA oder FDMA bzw. eine Kombination dieser Verfahren zum Einsatz. Über die Funkschnittstelle 28 zwischen TV-Empfangseinrichtung 2 und Signalaufbereitungseinrichtung 11 für die zweite Signalquelle 10 ist beispielsweise ein Empfang von Telefaxnachrichten oder ein Zugriff auf Kommunikationsdienst wie beispielsweise das Internet möglich.

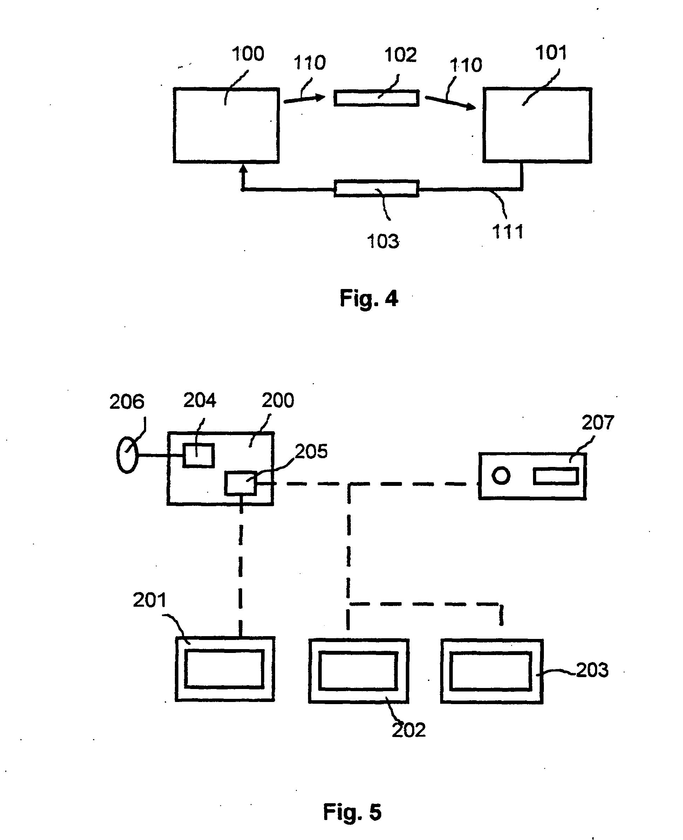

Fig. 4 zeigt ein zweites Ausführungsbeispiel zur Übertragung eines Sendeleistungsregelsignals bei zwei Kommunikationsgeräten. Dabei werden die bereits im Zusammenhang mit Fig.1 eingeführten Bezugszeichen verwendet. Bei dem in Fig. 4 dargestellten Ausführungsbeispiel wird von einem ersten Kommunikationsgerät 100 über eine Luftschnittstelle 110 ein Testsignal 102 ausgesendet. Dieses Testsignal 102 wird von einem zweiten Kommunikationsgerät 101 empfangen. Als "Rückkanal" zur Übertragung des vom zweiten Kommunikationsgerät empfangenen Testsignals 103 an das erste Kommunikationsgerät 100 ist eine leitungsgebundene Übertragungsverbindung 111 vorgesehen. Dabei handelt es sich beispielsweise um das Stromversorgungsnetz, das Antennennetz oder das Telefonnetz, an das sowohl das erste Kommunikationsgerät 100, als auch das zweite Kommunikationsgerät 101 angeschlossen sind.

Vorteil des in Fig. 4 dargestellten Verfahrens ist, daß das zweite Kommunikationsgerät 101 keine spezielle Sendeeinrichtung zur Abgabe eines drahtlosen Sendesignals benötigt. Vielmehr kann auf eine ohnehin bestehende Verbindungsleitung 111 zurückgegriffen werden, die zur Übertragung des empfangenen Testsignals, d. h. des Testsignals 103 verwendet wird.

Fig. 5 zeigt ein Ausführungsbeispiel eines Kommunikationsnetzes mit einer Kopfstation 200 zur Verteilung von Audio- und/oder Videosignalen. Die Kopfstation 200 weist eine Empfangseinrichtung 204 auf, der Empfangssignale einer Satellitenantenne 206 zugeführt werden. Darüber hinaus ist in der Kopfstation 200 ein Steuermodem 205 vorgesehen, das die Verteilung der Video- und/oder Audiosignale an Kommunikationsgeräte 201, 202, 203, 207 steuert.

Die grundsätzliche Funktion einer derartigen Kopfstation 200 besteht vor allem in der Verteilung der mittels der Antenne 206 empfangenen Fernseh- und Audiosignale. Darüber hinaus dient das in der Kopfstation 200 angeordnete Modem 205 zur Steuerung bzw. zur Anpassung der jeweils erforderlichen Sendeleistungen. Hierzu sendet das Modem 205 der Kopfstation 200 beispielsweise an das Modem des Kommunikationsgerätes 201, das beispielsweise mittels eines Identifikationscodes gezielt adressierbar ist, ein Testsignal. Dieses Testsignal wird von dem Kommunikationsgerät, beispielsweise einem Fernsehgerät 201 bzw. von einem mit diesem Fernsehgerät 201 gekoppelten Modem empfangen und wieder an die Kopfstation 200 zurückgesendet. Aus dem Grad der Übereinstimmung zwischen dem gesendeten und wieder empfangenen Testsignal wird eine Regelgröße zur Regelung der Sendeleistung des Modems 205 der Kopfstation 200 zur Versorgung des Modems des Kommunikationsgeräts 201 abgeleitet. Vorteil der in Fig. 5 dargestellten Einrichtung ist es, daß beispielsweise ein bestehendes Kabelsystem ggf. unter Zuhilfenahme des Stromversorgungsnetzes auch für eine Steuerung der Sendeleistunganpassung mit verwendet werden kann. Eine Anpassung der jeweilig benötigten Sendeleistungen hat weiterhin zur Folge, daß im Gegensatz zu gleichmäßig hohen Sendeleistungen Störungen von ebenfalls im Kommunikationsnetz enthaltenen weiteren Kommunikationsgeräten vermieden bzw. auf ein Minimum reduziert werden.

Zusammenfassend betrifft die Erfindung somit ein Verfahren zur Sendeleistungsanpassung insbesondere bei Kommunikationsgeräten der In-House-Kommunikation. Derartige Kommunikationsgeräte sind beispielsweise Fernsehwiedergabegeräte, die mit Empfangseinrichtungen oder Speichereinrichtungen gekoppelt sind. Zur Anpassung der jeweils individuell benötigten Sendeleistungen wird vorgeschlagen, daß insbesondere zu Beginn einer Übertragung zwischen zwei Kommunikationsgeräten vom eine Verbindung herstellenden ersten Kommunikationsgerät ein Testmuster gesendet wird, das von der Gegenstelle, d.h. von dem das Testmuster empfangenden zweiten Kommunikationsgerät zurückgesendet wird. Aus dem Grad der Übereinstimmung von gesendetem und wieder empfangenem Testsignal wird abgeleitet, mit welcher Sendeleistung die Kommunikationsgeräte betrieben werden. Hierdurch wird einerseits der Energieverbrauch der Kommunikationsgeräte auf das jeweils erforderliche Maß reduziert. Darüber hinaus werden Störeinflüsse benachbarter Kommunikationsgeräte minimiert. Die verringerten Sendeleistungen führen außerdem zu einer Verringerung des sogenannten Elektrosmogs.

## Patentansprüche

1. Verfahren zur Sendeleistungsanpassung bei Kommunikationsgeräten (100, 101), bei dem von einem ersten Kommunikationsgerät (100) ein Testsignal (102) ausgesendet wird und das Testsignal (102) von einem zweiten Kommunikationsgerät (101) empfangen und als Testsignal (103) wieder zurückgesendet wird, wobei im ersten Kommunikationsgerät (100) das vom zweiten Kommunikationsgerät (101) gesendete Testsignal (103) auf Übereinstimmung mit dem Original untersucht wird und aus dem Grad der Übereinstimmung eine Regelgröße (109) zur Regelung der Sendeleistung des ersten Kommunikationsgerätes (100) abgeleitet wird,
**dadurch gekennzeichnet, dass**
das erste Kommunikationsgerät (100) eine Signalaufbereitungseinrichtung (4, 11) zur Aufbereitung von analogen und/oder digitalen Ton- und/oder Bildsignalen, insbesondere von Rundfunk-, Fernseh- und/oder Telefonsignalen aufweist und dass das zweite Kommunikationsgerät (101) ein Teilnehmergerät an von der Signalaufbereitungseinrichtung (4, 11) zur Verfügung gestellten Diensten ist.

2. Verfahren nach Anspruch 1,
**dadurch gekennzeichnet, dass**
die Sendeleistung solange verringert wird, bis der Grad der Übereinstimmung zwischen dem gesendeten Testsignal (102) und dem empfangenen Testsignal (103) einen vorgebbaren Grenzwert erreicht.

3. Verfahren nach einem der Ansprüche 1 oder 2,
**dadurch gekennzeichnet, dass**
die Sendeleistungsanpassung einmalig bei Erstinbetriebnahme einer aus stationären Kommunikationsgeräten (100, 101) bestehenden Kommunikationsgerätekonfiguration erfolgt.

4. Verfahren nach einem der Ansprüche 1 bis 3,
**dadurch gekennzeichnet, dass**
die Sendeleistungsanpassung bei einem zusätzlich hinzukommenden Kommunikationsgerät und/oder in vorgebbaren Zeitabständen erfolgt.

5. Verfahren nach einem der Ansprüche 1 bis 4,
**dadurch gekennzeichnet, dass**
die aktuell erforderliche Sendeleistung kontinuierlich in Abhängigkeit des jeweils ermittelten Grades der Übereinstimmung des gesendeten Testsignals (102) und des empfangenen Testsignals (103) ermittelt und eingestellt wird.

6. Verfahren nach einem der Ansprüche 1 bis 5,
**dadurch gekennzeichnet, dass**
die Sendeleistungsanpassung zu Beginn einer Verbindungsaufnahme vor Beginn einer Übertragung von Nutzdaten oder parallel hierzu zwischen dem ersten Kommunikationsgerät (100) und dem zweiten Kommunikationsgerät (101) erfolgt.

7. Verfahren nach einem der vorherigen Ansprüche 1 bis 6,
**dadurch gekennzeichnet, dass**
Geräte der Unterhaltungselektronik verwendet werden.

8. Verfahren nach einem der Ansprüche 1 bis 7,
**dadurch gekennzeichnet, dass**
das erste Kommunikationsgerät (100) und das zweite Kommunikationsgerät (101) über eine drahtlose oder eine drahtgebundene bidirektionale Verbindung miteinander koppelbar sind.

9. Verfahren nach einem der Ansprüche 1 bis 8,
**dadurch gekennzeichnet, dass**
die Übertragung des Testsignals (102) vom ersten Kommunikationsgerät (100) über ein erstes Übertragungsmedium, insbesondere ein drahtloses Übertragungsmedium (110) erfolgt und die Rückübertragung des Testsignals (103) vom zweiten Kommunikationsgerät (101) zum ersten Kommunikationsgerät (100) über ein zweites Übertragungsmedium (111), insbesondere ein drahtgebundenes Übertragungsmedium, erfolgt.

10. Kommunikationsgerät (100, 101) mit einem Testmustergenerator (104), einer Sendeeinrichtung (105), einem Grenzwertvergleicher (108) und einer Sendeempfangsantenne (106) sowie einer Empfangseinrichtung (107) eingerichtet zur Durchführung des Verfahrens nach einem der Ansprüche 1 bis 9.

11. Kommunikationsgerät (101, 102) nach Anspruch 10,
**dadurch gekennzeichnet, dass**
das Kommunikationsgerät ein Gerät der Unterhaltungselektronik ist.

## Claims

1. Method of transmission power adjustment in communications appliances (100, 101), in which a test signal (102) is emitted by a first communications appliance (100) and the test signal (102) is received by a second communications appliance (101) and is sent back again as a test signal (103), wherein the test signal (103) sent by the second communications appliance (101) is examined in the first communications appliance (100) for match with the original and a controlled variable (109) for controlling the transmission power of the first communications appliance (100) is derived from the degree of match, **characterized in that** the first communications appliance (100) comprises a signal processing device (4, 11) for processing analog and/or digital audio and/or video signals, in particular radio, television and/or telephone signals, and **in that** the second communications appliance (101) is a user appliance for services provided by the signal processing device (4, 11).

2. Method according to Claim 1, **characterized in that** the transmission power is reduced until the degree of match between the sent test signal (102) and the received test signal (103) reaches a preset limit value.

3. Method according to either of Claims 1 or 2, **characterized in that** the transmission power adjustment takes place on one occasion only, during the initial commissioning of a communications appliance configuration comprising stationary communications appliances (100, 101).

4. Method according to any one of Claims 1 to 3, **characterized in that** the transmission power adjustment takes place in the case of an additionally included communications appliance and/or at presettable time intervals.

5. Method according to any one of Claims 1 to 4, **characterized in that** the currently required transmission power is continuously determined and adjusted as a function of the respectively determined degree of match of the sent test signal (102) and the received test signal (103).

6. Method according to any one of Claims 1 to 5, **characterized in that** the transmission power adjustment takes place at the beginning of the establishment of a connection prior to the beginning of a transmission of useful data or parallel thereto between the first communications appliance (100) and the second communications appliance (101).

7. Method according to any one of the preceding Claims 1 to 6, **characterized in that** entertainment electronics appliances are used.

8. Method according to any one of Claims 1 to 7, **characterized in that** the first communications appliance (100) and the second communications appliance (101) can be coupled to one another via a wireless or a wired bi-directional connection.

9. Method according to any one of Claims 1 to 8, **characterized in that** the transmission of the test signal (102) from the first communications appliance (100) takes place via a first transmission medium, in particular a wireless transmission medium (110), and the return transmission of the test signal (103) from the second communications appliance (101) to the first communications appliance (100) takes place via a second transmission medium (111), in particular a wired transmission medium.

10. Communications appliance (100, 101) equipped with a test pattern generator (104), a sending device (105), a limit-value comparator (108) and a transmit-receive antenna (106) and also a receiving device (107) for performing the method according to any one of Claims 1 to 9.

11. Communications appliance (100, 101) according to Claim 10, **characterized in that** the communication appliance is an entertainment electronics appliance.

## Revendications

1. Procédé pour l'adaptation de la puissance de transmission pour des appareils de communication (100, 101), dans lequel un signal d'essai (102) est émis par un premier appareil de communication (100) et le signal d'essai (102) est reçu par un second appareil de communication (101) et renvoyé comme signal d'essai (103), où, dans le premier appareil de communication (100), le signal d'essai (103) émis par le second appareil de communication (101) est comparé à l'original et, à partir du degré de correspondance, une valeur réelle (109) est délivrée pour le réglage de la puissance de transmission du premier appareil de communication (100),
**caractérisé en ce que** le premier appareil de communication (100) présente un dispositif de traitement de signal (4, 11) pour le traitement de signaux audio et/ou vidéo analogiques et/ou numériques, en particulier de signaux de radio, de télévision et/ou de téléphone et **en ce que** le second appareil de communication (101) est un dispositif d'abonné aux services proposés par le dispositif de traitement du signal (4, 11).

2. Procédé selon la revendication 1, **caractérisé en ce que** la puissance de transmission est réduite tant que le degré de correspondance entre le signal d'essai émis (102) et le signal d'essai reçu (103) atteint une valeur limite déterminée.

3. Procédé selon l'une des revendications 1 ou 2, **caractérisé en ce que** l'adaptation de puissance de transmission s'effectue uniquement lors de la première mise en service du configuration d'appareils de communication se composant des appareils de communication fixes (100, 101).

4. Procédé selon 'l'une des revendications 1 à 3, **caractérisé en ce que** l'adaptation de puissance de transmission s'effectue dans le cas d'un appareil de communication supplémentaire et/ou à des périodes prédéterminées.

5. Procédé selon l'une des revendications 1 à 4, **caractérisé en ce que** la puissance de transmission actuellement nécessaire est détectée continûment conformément au degré de correspondance détecté respectivement du signal d'essai émis (102) et du signal d'essai reçu (103) et est réglée.

6. Procédé selon l'une des revendications 1 à 5, **caractérisé en ce que** l'adaptation de puissance de transmission s'effectue au début d'une connexion avant le début d'une transmission de données utiles ou parallèlement à ceci entre le premier appareil de communication (100) et le second appareil de communication (101).

7. Procédé selon l'une des revendications précédentes 1 à 6, **caractérisé en ce que** des appareils de l'électronique de divertissement sont utilisés.

8. Procédé selon l'une des revendications 1 à 7, **caractérisé en ce que** le premier appareil de communication (100) et le second appareil de communication (101) peuvent être couplés l'un à l'autre par l'intermédiaire d'une liaison bidirectionnelle sans fil ou par fil.

9. Procédé selon l'une des revendications 1 à 8, **caractérisé en ce que** la transmission du signal d'essai (102) s'effectue par le premier appareil de communication (100) par l'intermédiaire d'un premier support de transmission, en particulier un support de transmission sans fil (110) et la transmission en retour du signal d'essai (103) s'effectue par le second appareil de communication (101) vers le premier appareil de communication (100) par l'intermédiaire d'un second support de transmission (111), en particulier un support de transmission par fil.

10. Appareil de communication (100, 101) muni d'un générateur de modèle d'essai (104), d'un dispositif de transmission (105), d'un comparateur de valeur limite (108) et d'une antenne d'émission-réception (106) ainsi que d'un dispositif de réception (107) disposés pour l'exécution du procédé selon l'une des revendications 1 à 9.

11. Appareil de communication (101, 102) selon la revendication 10, **caractérisé en ce que** l'appareil de communication est un appareil de l'électronique de divertissement.
